# EUROPEAN PATENT APPLICATION

(11) **EP 1 324 450 A1**
(43) Date of publication of application: **02.07.2003**
(21) Application number: 02388078.4
(22) Date of filing: 19.12.2002
(51) Int. Cl.: H02G 3/10

(54) **An electric component for mounting on a wall in connection with a channel**

(30) Priority: 20.12.2001 DK 200101923
(71) Applicant: LK A/S, DK-2750 Ballerup (DK)
(72) Inventor: Madsen, Kaj Fischer, 2950 Vedbaek (DK)
(74) Representative: Wittrup, Flemming

(57) **Abstract**

An electric component (5,10,14,18) has a outlet socket (9,11,12,17,19) for receiving an electric plug (13); said outlet socket being oriented such that a plug introduced therein is caused to extend in parallel with the wall when the electric component is arranged plane parallel with the wall. The component is preferably configured such that it overlaps or extends into a channel (1,2,3,4) arranged on the outside of the wall.

## Description

The invention relates to an electric component for mounting on a wall in connection with a channel/duct for distributing wiring and with outlet sockets for receiving an electric plug.

Electric outlets of this kind are known eg from US 3,821,688, SE 425758 and EP 627 802.

It is a common feature of these prior art components that they are mounted on the outside of a channel arranged on the outside of the wall, whereby the component is caused to project relatively far from the wall, whereby also the cord with the electric plug to be received in the outlet socket projects far from the wall. In particular in case of plug sockets by the floor, this is a very significant drawback during arrangement of furniture, since it is not possible to push pieces of furniture closely towards the wall. Apart from the furniture-arrangement problem, the prior art also involves a risk of "capturing" the cord, eg when children are playing or during cleaning, if the cord projects a just small distance from the wall.

It is the object of the invention to provide a component, whereby the cord is located in complete abutment on the wall after the plug has been introduced in the outlet socket.

This object is accomplished in that the outlet socket is oriented such that the plug can be introduced/withdrawn essentially in parallel with the wall in close proximity thereto when the component is mounted on the wall. This and the circumstance that the part of the component that contains the outlet socket is in close abutment on the wall means that the line is caused to be situated close by the wall. The component can be used both in connection with channels arranged on the outside of the wall and in connection with ducts concealed behind the wall. In both cases the outlet socket is arranged in a part of the component that is in close abutment on the wall.

By a first embodiment the one side edge of the component can be caused to abut on a channel arranged on the outside of the wall, which side edge has a passage whereby it is possible to take wiring from the channel and into the component without the wiring being accessible to a user. Alternatively the passage can be provided at the back of the component, thereby enabling the wiring to extend through a wall that conceals a duct for the distribution of lines. The duct may have a rectangular cross section or may be in the form of a round tubular member. Of course, the passage must be in compliance with the high-voltage regulations currently in force.

In accordance with a second embodiment the component can be provided with cut-out facing towards the wall, whereby the component completely or partially overlaps the channel. This is a convenient embodiment in case the thickness of the component, measured from the wall, is larger than the corresponding thickness of the duct. This further means that an increased abutment area between the component and the duct is provided, whereby the passage is allowed to occupy more space. In case of an old installation where steel pipes can be sitting on the outside of the wall, the components advantageously encircle the pipe completely or partially.

By an alternative embodiment the component is able to extend a distance into an external channel and the passage is configured so as to face towards the cavity of the channel.

Preferably the component is configured to be as flat as possible, eg such that is it comparable to the depth of a door frame, which can readily be accomplished when the outlet socket is configured for receiving flat plugs. In case the outlet socket is to receive rounded plugs, eg three-legged ones with ground lead, the component needs to have larger thickness around the outlet socket as such, whereas the remainder of the component is as flat as possible, depending on which of the above-mentioned embodiments is preferred.

The component may be provided with selector switches that are operated by means of a key or cordless remote control.

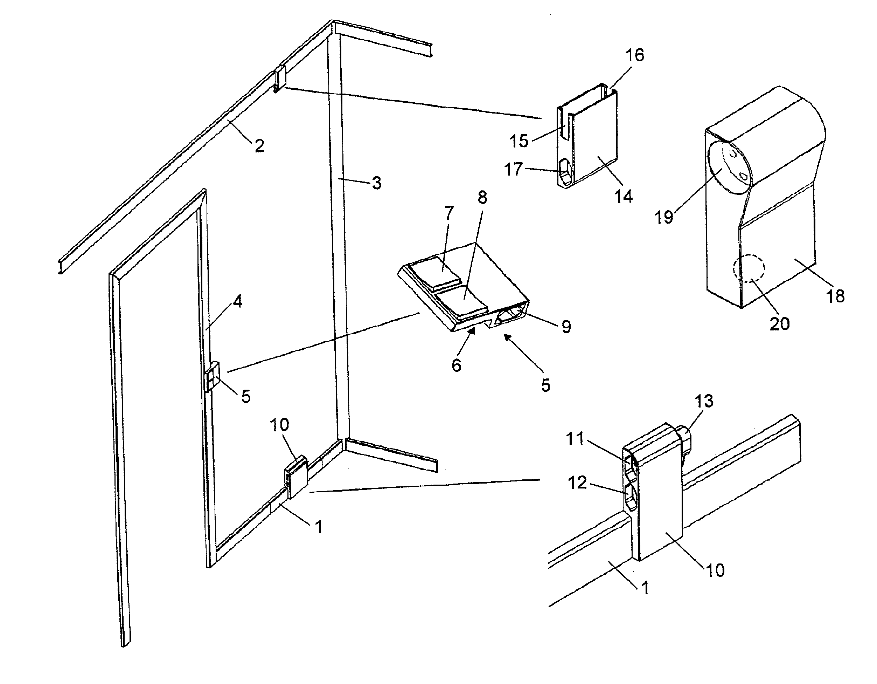

The invention will now be explained in further detail in the following description of some embodiments; reference being made to the drawing that shows various varieties of the electric component.

The figures show a number of channels arranged on the outside of the wall, wherein the channels may comprise a floor panel 1, a ceiling panel 2, a corner panel 3 and door panels 4 that may be located immediately in close abutment on a door frame or that may constitute the door frame as such. This kind of installation is used in particular in connection with renovation, but it is to be noted that the invention also lends itself for use in connection with a concealed installation system in the form of rectangular channels or round tubular elements, which are most often used in connection with new construction work.

A first embodiment of the component according to the invention is the one designated by 5 in the figure and configured to partially overlap the floor panel 4. The overlapping is provided by a cut-out 6. Opposite the cut-out 6 a pair of switch keys 7,8 are arranged and on the opposite side of the component a not shown passage is shown that is configured for providing an electric connection between electric wiring in the door panel and one or more electric outlet sockets, like the one shown by the reference numeral 9.

In accordance with the invention the outlet sockets 9 are oriented such that a plug can be introduced essentially in parallel with the wall on which the part of the component that is located opposite the door panel 4 abuts. The outlet socket 9 is thus caused to be situated in close proximity to the wall and due to its orientation, the plug introduced therein and its associated cord will be caused to be situated in close proximity to the wall, and there is thus no longer a need for cords to project from the wall with an ensuing risk of unintentionally pulling out the plug completely or partially, eg when children are playing or during cleaning, rearrangement of furniture, etc. Instead of switch keys 7 and 8, switch contacts in the component can be remote-controlled by cordless operation.

The figure also shows a floor component 10, wherein are shown two further outlet sockets 11,12 and a plug 13 that is introduced into a further outlet socket. The component 10 has passages that are open towards the cavity of the channel 1, as will appear more clearly from the electric ceiling outlet 14, see cut-outs 15, 16. The electric outlet 14 also has an outlet socket 17 in accordance with the invention and is suitable eg for receiving a plug from a wall lamp.

By 18 a further embodiment of a component according to the invention is shown, which component is configured to receive a round plug in said round outlet socket 19, which, however, requires so much space that the component is advantageously configured such that it is comparatively thick opposite the outlet and is configured to be rather flat at the opposite end, which is configured for being able to abut on an external channel. By 20 an aperture in the back wall is symbolised, whereby the component 18 could also be caused to be located on the outside on a concealed installation, while still providing the advantages that the plug and associated cord is caused to abut as closely as possible on the wall on which the component 18 is mounted.

## Claims

1. An electric component for mounting on a wall in connection with a channel/duct for distributing wiring and with outlet sockets for receiving an electric plug; **characterised in that** the outlet socket is configured in a sidewall of the component that, in its mounted position, projects from the wall; and that the outlet socket is oriented such that the plug can be introduced/withdrawn essentially in parallel with the wall in close proximity thereto when the component is mounted on the wall.

2. A component according to claim 1, **characterised in that** the component has a side that is configured for facing towards said channel/duct; and that, in this side, the component has a passage for electric wiring for transmission of electric power from the lines in the duct to the outlet socket.

3. A component according to claim 2 and wherein the duct projects a distance from the wall, **characterised in that**, in the in-use position, the component has a recess facing towards the wall for fully or partially overlapping the channel/duct.

4. A component according to claim 3, **characterised in that** one of the sides of the recess is provided with said passage.

5. A component according to claims 2-4, **characterised in that** a part of the component is intended for being able to extend into a cut-out in the duct; and that said passage is configured in this part whereby the passage is caused to face towards the cavity of the duct.

6. A component according to claims 1-5, **characterised in that** the thickness of the component as measured from the wall in the in-use position thereof is the largest opposite the outlet socket.

7. A component according to claims 1-6, **characterised in that** the component comprises selector switches.

8. A component according to claim 7, **characterised in that** the selector switches are activated to cordless remote control.
